# EUROPEAN PATENT APPLICATION

(11) **EP 4 711 250 A1**
(43) Date of publication of application: **18.03.2026**
(21) Application number: 25202731.3
(22) Date of filing: 17.09.2025
(51) Int. Cl.: B62D 25/08, B62D 25/20, B60K 1/04

(54) **VEHICLE STRUCTURE**

(30) Priority: 17.09.2024 GB 202413633
(71) Applicant: Jaguar Land Rover Limited, Coventry, Warwickshire CV3 4LF (GB)
(72) Inventor: Lidgard, Brian, Coventry, CV3 4LF (GB); Godding, Chris, Coventry, CV3 4LF (GB); Nicholls, Stephen, Coventry, CV3 4LF (GB); Wong, Alun, Coventry, CV3 4LF (GB); Harris, Ryan, Coventry, CV3 4LF (GB)
(74) Representative: Jaguar Land Rover Patents Department

(57) **Abstract**

Aspects of the present invention relate to a vehicle crash structure (200) including a longitudinal energy absorption member (202); and a load bearing element (204). The load bearing element (204) includes a first end (214), a second end (216), a first load bearing arm (218) and a second load bearing arm (220). Each of the first load bearing arm (218) and the second load bearing arm (220) extends between the first end (214) and the second end (216) of the load bearing element (204). The first end (214) of the load bearing element (204) is attached to one end (210) of the longitudinal energy absorption member (202) and the second end (216) of the load bearing element (204) is attached, in use, to a cross member (310) of a vehicle body structure (300) that is between a bulkhead panel (312) of the vehicle body structure (300) and the longitudinal energy absorption member (202). The longitudinal energy absorption member (202) and the load bearing element (204) together define a load path for a longitudinal load occurring during a crash event. The first load bearing arm (218) defines a first diverging portion (250) of the load path and the second load bearing arm (220) defines a second diverging portion (252) of the load path.

## Description

### TECHNICAL FIELD

The present disclosure relates to a vehicle structure. Aspects of the invention relate to a vehicle crash structure, to a vehicle body structure including the vehicle crash structure, and to a vehicle including the vehicle body structure.

### BACKGROUND

It is known to provide traction batteries for electric vehicles, for example battery electric vehicles or hybrid electric vehicles, underneath the cabin area of the vehicle. In typical vehicle architectures, the traction battery is provided underneath the rear passenger seats (which may be referred to as the row two seats).

This results in either the height of the cabin area (and thus the vehicle) being increased to accommodate the traction battery, or the height of the cabin area (and thus the vehicle) being maintained and the head room of passengers in the rear seats being restricted.

It is an aim of the present invention to address one or more of the disadvantages associated with the prior art.

### SUMMARY OF THE INVENTION

Aspects and embodiments of the invention provide a vehicle crash structure, a vehicle body structure including the vehicle crash structure, and a vehicle including the vehicle body structure as claimed in the appended claims.

According to an aspect of the present invention there is provided a vehicle crash structure, for example a vehicle crash structure for a vehicle. The vehicle may be an electric vehicle. The vehicle crash structure may be a vehicle crash structure for a battery electric vehicle (BEV) or a hybrid electric vehicle (HEV). The vehicle crash structure includes a longitudinal energy absorption member and a load bearing element, wherein the longitudinal energy absorption member and the load bearing element together define a load path for a longitudinal load, for example a longitudinal load occurring during a crash event. The load path has a first diverging portion and a second diverging portion.

Advantageously, the first diverging portion and the second diverging portions of the load path enable the architecture of a vehicle to be designed to accommodate a traction battery and/or power electronics of different sizes, e.g. larger, and/or in different positions, e.g. further forward or further rearward of the cabin area of the vehicle, since the first diverging portion and the second diverging portion of the load path ensure that, in a crash event, forces from a longitudinal load are diverted.

The load bearing element may include a first end, a second end, a first load bearing arm and a second load bearing arm. The first load bearing arm and/or the second load bearing arm may extend between the first end and the second end of the load bearing element.

The first end of the load bearing element may, for example, be attached to one end of the longitudinal energy absorption member.

The second end of the load bearing element may, for example, be attached, in use, to a cross member of a vehicle body structure. The vehicle body structure may be between, e.g. positioned between or intermediate, a bulkhead panel of the vehicle body structure and the longitudinal energy absorption member.

According to an aspect of the invention there is provided a vehicle crash structure, for example a vehicle crash structure for an electric vehicle. The vehicle crash structure may be a vehicle crash structure for a battery electric vehicle (BEV) or a hybrid electric vehicle (HEV).

The vehicle crash structure includes a longitudinal energy absorption member; and a load bearing element, which together define a load path for a longitudinal load occurring during a crash event.

The load bearing element includes a first end, a second end, a first load bearing arm and a second load bearing arm. Each of the first load bearing arm and the second load bearing arm extends between the first end and the second end of the load bearing element.

The first end of the load bearing element is attached to one end of the longitudinal energy absorption member and the second end of the load bearing element is attached, in use, to a cross member of a vehicle body structure that is between a bulkhead panel of the vehicle body structure and the longitudinal energy absorption member.

The first load bearing arm defines a first diverging portion of the load path and the second load bearing arm defines a second diverging portion of the load path.

Advantageously, the load bearing element, and the first diverging portion and the second diverging portion of the load path it defines, enables part of a traction battery and/or power electronics (or indeed other components) to be positioned such that they extend beyond the bulkhead panel from the cabin area of the vehicle (either forward of a forward bulkhead panel, e.g. a front dash panel, or rearward of a rear bulkhead panel). The first diverging portion and the second diverging portion of the load path ensure that, in a crash event, forces from a longitudinal load are directed around the traction battery and/or power electronics, thereby protecting them. In such an arrangement of a vehicle crash structure, in which the second end of the load bearing element is attached, in use, to a cross member of the vehicle body structure that is forward of the bulkhead panel, for example, this enables the traction battery to be moved further forward in the vehicle. This enables the row two seats of the vehicle to be lowered to a position that provides more head room and thus improves the comfort for passengers in row two of the vehicle. The arrangement of the vehicle crash structure may also, advantageously, make it possible for a larger traction battery to be accommodated (since the traction battery could extend beyond the cabin area of the vehicle).

The load bearing element may be configured to at least partially accommodate electronic and/or electrical components of the vehicle. The load bearing element may be, for example, configured to at least partially accommodate a traction battery and/or power electronics of the vehicle. The first load bearing arm and the second load bearing arm of the load bearing element may, for example, be spaced apart such that a traction battery and/or power electronics of the vehicle may be at least partially accommodated between the first load bearing arm and the second load bearing arm.

The first load bearing arm and/or the second load bearing arm may include one or more opening. Beneficially, components of the power electronics may extend through the one or more opening of the first load bearing arm and/or the second load bearing arm.

The first load bearing arm and/or the second load bearing arm may include one or more rib or rib portion. Advantageously, the provision of the one or more rib or rib portion enables the size of the first load bearing arm and/or the second load bearing arm to be reduced such that the weight of the load bearing element can be reduced.

Further advantageously, such first load bearing arms and/or second load bearing arms including one or more opening and/or one or more rib or rib portion, can be manufactured easily, for example by casting.

In an embodiment, when the load bearing element is attached to the cross member of the vehicle body structure, the first load bearing arm and the second load bearing arms of the load bearing element define a space between the longitudinal energy absorption member and the cross member of the vehicle body structure for accommodating a part of a traction battery and/or power electronics of the vehicle.

The space defined between the longitudinal energy absorption member and the cross member can advantageously accommodate, or at least partially accommodate, components of the vehicle, for example a traction battery and/or power electronics. The traction battery and/or power electronics can thus be positioned such that at least a part of them is forward of a forward bulkhead panel, e.g. a dash panel, and/or rearward of the rear bulkhead panel (depending on the location of the vehicle crash structure in the vehicle) and still be protected by the vehicle crash structure. The size of the traction battery could also be increased as a part of it could be accommodated in the space formed forward of and/or rearward of the bulkhead panel (again, depending on the location of the vehicle crash structure in the vehicle).

The longitudinal energy absorption member of the vehicle crash structure may have a longitudinal axis. The first diverging portion of the load path may extend from the first end of the load bearing element at a first non-zero angle relative to the longitudinal axis of the longitudinal energy absorption member. Additionally or alternatively, the second diverging portion of the load path may extend from the first end of the load bearing element at a second non-zero angle relative to the longitudinal axis of the longitudinal energy absorption member.

The first diverging portion and/or the second diverging portion of the load path may extend in a non-parallel direction from the longitudinal axis at the first end of the load bearing element. The non-parallel direction may, for example, extend toward a side portion of the vehicle.

The first diverging portion and/or the second diverging portion may be configured to divert the load path away from the longitudinal axis of the longitudinal energy absorption member.

The first diverging portion and/or the second diverging portion may divert the load path to a longitudinal axis at a side of the vehicle, wherein the longitudinal axis at the side of the vehicle is parallel to, but spaced apart from, the longitudinal axis of the longitudinal energy absorption member.

Advantageously, the first diverging portion and the second diverging portions of the load path provided by the first load bearing arm and the second load bearing arm of the load bearing element divert the load path from the longitudinal axis of the longitudinal energy absorption member around the traction battery and/or power electronics, to a parallel longitudinal axis extending along the side, for example along the sills, of the vehicle body structure.

In an embodiment, the first diverging portion of the load path may extend from the first end of the load bearing element in a first direction and/or the second diverging portion of the load path may extend from the first end of the load bearing element in a second direction. The first direction may be different to the second direction.

Advantageously, the different directions in which the first diverging portion the second diverging portion of the load path extend enables a longitudinal load occurring during a crash event to be diverted in different directions, for example to circumvent a structure within the vehicle body. Additionally the longitudinal load may be conveyed to another component of the vehicle body structure, for example a sill extending along a side of the vehicle.

In an embodiment, the first non-zero angle may be between 10 degrees and 60 degrees. The second non-zero angle may be between 10 degrees and 60 degrees. The first non-zero angle may be the same as the second non-zero angle. Alternatively, the first non-zero angle may be different to the second non-zero angle.

Advantageously, the range of angles between the longitudinal axis of the longitudinal energy absorption member and the first and second load bearing arms of the load bearing element allow the load path to be diverted around the battery, whilst maintaining the structural rigidity of the load bearing element and preventing the vehicle crash structure from twisting and collapsing in a crash event.

The first load bearing arm and the second load bearing arm of the load bearing element may be manufactured, for example cast or formed, as unitary components. Alternatively, one of the first load bearing arm and the second load bearing arm may be fixed or attached or otherwise fastened by any suitable means to the other of the first load bearing arm and the second load bearing arm in order to provide the load bearing element.

In an embodiment, the load bearing element may have a first longitudinal stiffness. The longitudinal energy absorption member may have a second longitudinal stiffness. The first longitudinal stiffness may be different to the second longitudinal stiffness. The first longitudinal stiffness of the load bearing element may be, for example, greater than the second longitudinal stiffness of the longitudinal energy absorption member.

Advantageously, the longitudinal energy absorption member has a lower longitudinal stiffness and thus is configured such that, in a crash event, the longitudinal energy absorption member compresses before any deformation of the load bearing element occurs. This provides protection to the traction battery and/or power electronics that are, at least partially, accommodated in the space defined by the load bearing element and the cross member of the vehicle crash structure.

In an embodiment, the load bearing element of the vehicle crash structure may include a support leg.

A first end of the support leg may be attached to the first end of the load bearing element. The support leg may be a separate component to the first load bearing arm and the second load bearing arm of the load bearing element. The support leg may be attached to the first end of the load bearing element, for example by fixing, attaching or otherwise fastening by any suitable means. The first end of the support leg may be attached to the first end of the load bearing element by fasteners, for example.

A second end of the support leg may be attached, in use, to the cross member of the vehicle body structure. The support leg may be a separate component to the cross member. The support leg may be attached to the cross member of the vehicle, for example by fixing, attaching or otherwise fastening by any suitable means. The second end of the support leg may be attached to the cross member by welding, for example.

The support leg may be an extruded support leg.

Advantageously, the support leg provides additional stability to the vehicle crash structure and, in a crash event, prevents the vehicle crash structure from collapsing inwards.

The support leg may define a third diverging portion of the load path formed by the longitudinal energy absorption member and the load bearing element. The third diverging portion of the load path may extend from the first end of the load bearing element. The support leg may be spaced apart from the first load bearing arm and the second load bearing arm of the load bearing element. The third diverging portion of the load path may extend from the first end of the load bearing element at a third non-zero angle relative to the longitudinal axis of the longitudinal energy absorption member. The third diverging portion of the load path may extend in a third direction. The third direction may be different to the first direction in which the first diverging portion of the load path extends and/or the second direction in which the second diverging portion of the load path extends. The third diverging portion of the load path may be directed towards a centre portion of the vehicle.

Advantageously, the first load bearing arm, the second load bearing arm and the support leg of the load bearing element extend from the first end of the load bearing element at angles relative to each other, thereby forming a base with a greater cross sectional area than a cross sectional area at the one end of the longitudinal energy absorption member. This results in greater stability and load bearing capacity of the vehicle crash structure.

The load path may trifurcate into a first diverging portion, a second diverging portion and a third diverging portion of the load path, corresponding to the first load bearing arm, the second load bearing arm and the support leg, respectively.

Advantageously, the third diverging portion of the load path maintains the structural rigidity of the load bearing element, preventing inward collapse of the load bearing element in the event of a crash event. Additionally, the space between the support leg and the first load bearing arm and the second load bearing arm advantageously enables the weight of the vehicle crash structure to be minimised and provides space for components to extend through and/or be at least partially accommodated within.

The third non-zero angle may be between 10 degrees and 60 degrees. Advantageously, the range of angles between the longitudinal axis of the longitudinal energy absorption member and the support leg of the load bearing element allow the load path to be diverted, whilst maintaining the structural rigidity of the load bearing element and preventing the vehicle crash structure from twisting and collapsing in a crash event.

According to an aspect of the present invention there is provided a vehicle body structure, for example a vehicle body structure for a vehicle. The vehicle may be an electric vehicle. The vehicle body structure may be a vehicle body structure for a battery electric vehicle (BEV) or a hybrid electric vehicle (HEV). The vehicle body structure includes a vehicle crash structure as defined above, a cross member and a bulkhead panel. The cross member is positioned between the bulkhead panel and the longitudinal energy absorption member of the vehicle crash structure. The second end of the load bearing element is attached to the cross member.

Advantageously, the vehicle crash structure is attached to a cross member that may be separate from, or attached to the bulkhead panel, depending on the vehicle architecture and the position of the vehicle crash structure in a forward arrangement at a front of the vehicle and/or in a rearward arrangement at the rear of the vehicle.

In an embodiment, the cross member and the bulkhead panel may form part of a bulkhead assembly.

Advantageously, the vehicle crash structure may be attached to a cross member that is part of a bulkhead assembly, removing the need for an additional cross member for the vehicle crash structure to attach to, thereby reducing the weight of the vehicle.

The vehicle crash structure may be a first vehicle crash structure. The vehicle body structure may include a second vehicle crash structure. The second vehicle crash structure may be a vehicle crash structure as defined above.

Advantageously, the provision of a first vehicle crash structure and a second vehicle crash structure ensures that the vehicle body structure is able to withstand a greater force in the event of a crash.

In an embodiment, the first vehicle crash structure may be configured for mounting on a first side of a vehicle. The second vehicle crash structure may be configured for mounting on a second side of a vehicle, in use. The second side of the vehicle may be, for example, an opposing side of the vehicle.

Advantageously, an entire width of the front and/or the back of the traction battery and/or power electronics are protected by the vehicle body structure having a vehicle crash structure on either side at the front and/or the back of the vehicle body.

In an embodiment, the first vehicle crash structure and second vehicle crash structure may together define an upper load path. The vehicle body structure may include a lower load structure defining a lower load path.

The combination of a lower load structure and the load structure directs loads around the traction battery and/or power electronics (and associated components) and provides additional support to the vehicle crash structure.

According to an aspect of the invention there is provided a vehicle, for example an electric vehicle. The electric vehicle may be a battery electric vehicle (BEV) or a hybrid electric vehicle (HEV).

The vehicle may include a vehicle body structure as defined above.

The vehicle body structure may be provided at a front portion of the electric vehicle and/or at a rear portion of the electric vehicle.

Advantageously, the vehicle crash structure can be used in the front and/or the rear of a vehicle to protect components of the battery that are forward or rearward of the cabin space in the event of a front end crash and/or a rear end crash.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
FIG. 1 shows a perspective view of a known vehicle crash structure;
FIG. 2A shows a perspective view of a vehicle crash structure according to an embodiment of the invention;
FIG. 2B shows a side view of the vehicle crash structure of FIG.2A;
FIG. 2C shows a partial perspective view of the vehicle crash structure of FIG.2A;
FIG. 2D shows a partial perspective view of the vehicle crash structure of FIG. 2A;
FIG. 2E shows a partial perspective view of the vehicle crash structure of FIG. 2A;
FIG. 3 shows a perspective view of a vehicle body structure according to an embodiment of the invention;
FIG. 4A shows a front view of a vehicle in accordance with an embodiment of the invention; and
FIG. 4B shows a plan view of the vehicle of FIG. 4A.

### DETAILED DESCRIPTION

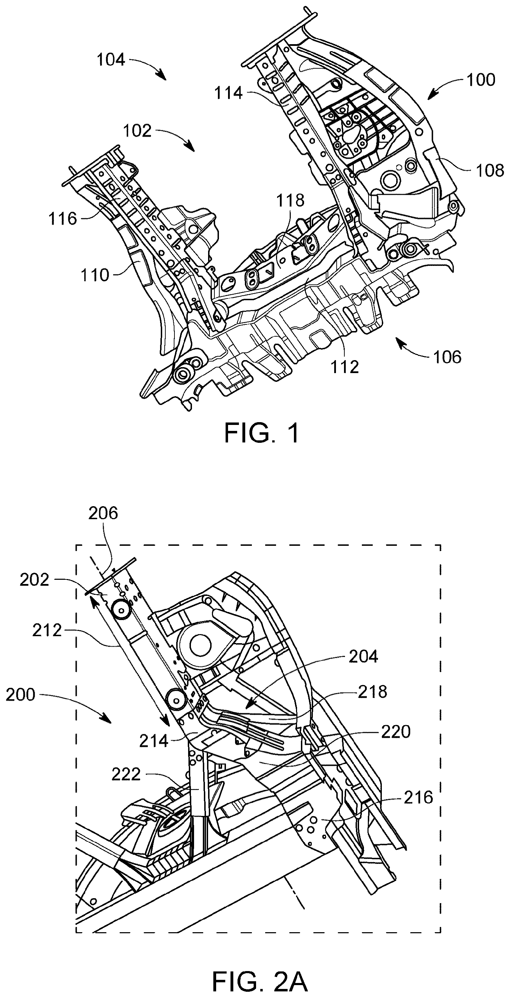

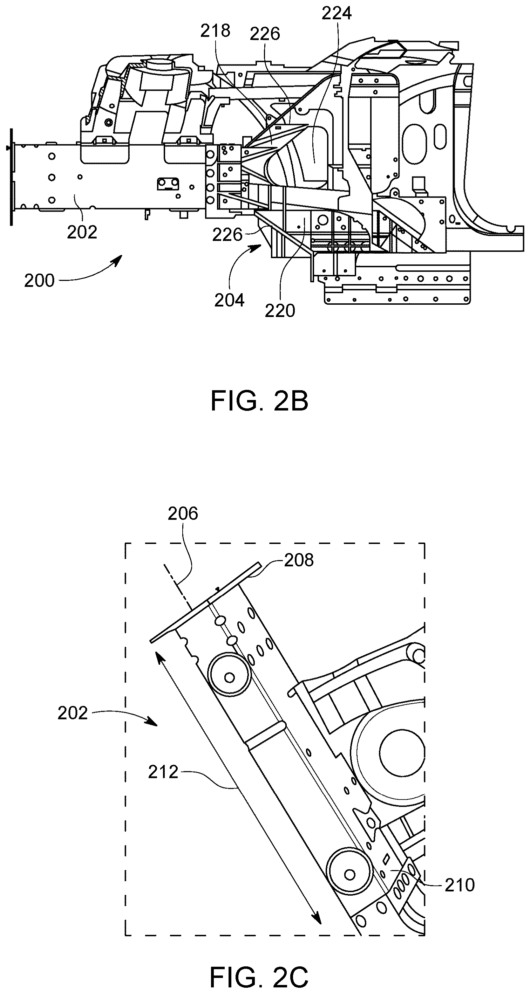

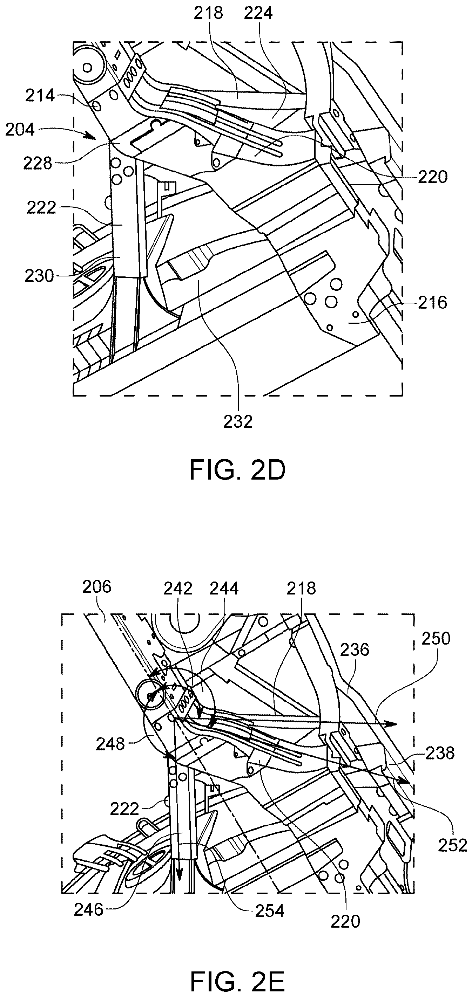

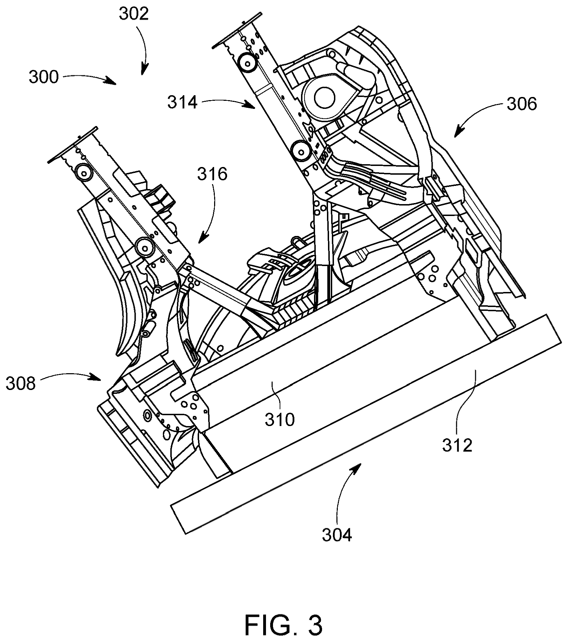

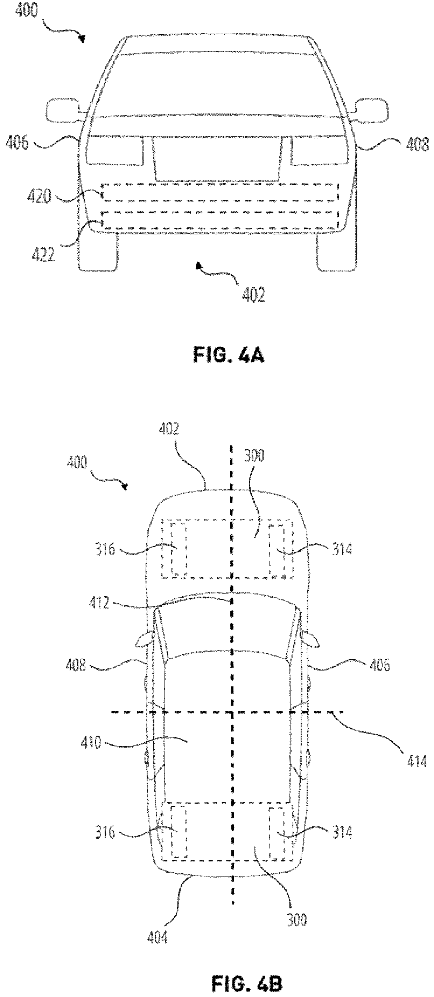

A vehicle crash structure 200 in accordance with an embodiment of the present invention is described herein with reference to the accompanying FIG. 2A, FIG. 2B, FIG. 2C and FIG. 2D. As shown in FIG. 3, the vehicle crash structure 200 is installed in a vehicle body structure 300, which is, as shown in FIG. 4A and FIG. 4B, installed in a vehicle 400.

With reference to FIG. 1, there is a vehicle body structure 100 including a known vehicle crash structure 102.

The vehicle body structure 100 may be positioned at a front portion 104 of the vehicle (i.e. forward of a cabin area 106). The vehicle body structure 100 includes a first side portion 108, which may extend along a first side of the vehicle, a second side portion 110, which may extend along a second, opposing, side of the vehicle and a cross member 112, which may extend across a width of the vehicle.

The vehicle crash structure 102 includes a first longitudinal energy absorption member 114, a second longitudinal energy absorption member 116 and a load bearing element 118.

The load bearing element 118 extends along the width of a vehicle and is in abutting contact along the length of and attached to the cross member 112 of the vehicle body structure 100. A longitudinal axis of the load bearing element 118 is thus parallel to a longitudinal axis of the cross member 112.

Each of the first longitudinal energy absorption member 114 and the second longitudinal energy absorption member 116 is positioned between the front portion 104 of the vehicle and the load bearing element 118 and extends in a direction that is generally perpendicular to a length of the load bearing element 118. In other words, each of the first longitudinal energy absorption member 114 and the second longitudinal energy absorption member 116 has a longitudinal axis that is parallel to the longitudinal axis of the vehicle, while the load bearing element 118 and the cross member 112 each have a longitudinal axis that is transverse to the longitudinal axis of the vehicle.

In a crash event, a longitudinal load applied to the front portion 104 of the vehicle is transmitted along each of the first longitudinal energy absorption member 114 and the second longitudinal energy absorption member 116. Any energy not absorbed by the first longitudinal energy absorption member 114 and the second longitudinal energy absorption member 116 is transferred to the load bearing element 118 and the sides of the vehicle, for example sills at the sides of the vehicle.

A vehicle crash structure 200 in accordance with an embodiment of the invention will now be described with particular reference to FIG. 2A, FIG. 2B, FIG. 2C and FIG. 2D.

The vehicle crash structure 200 includes a longitudinal energy absorption member 202 and a load bearing element 204.

With particular reference to FIG. 2A and FIG. 2C, the longitudinal energy absorption member 202 is an elongate structure having a longitudinal axis 206, a first end 208 and a second end 210. A length 212 of the longitudinal energy absorption member 202 is defined between the first end 208 and the second end 210.

Referring now to FIG. 2D, the load bearing element 204 has a first end 214 and a second end 216. The load bearing element 204 has a first load bearing arm 218, a second load bearing arm 220 and a support leg 222.

Each of the first load bearing arm 218 and the second load bearing arm 220 is unitary with the load bearing element 204 and extends between the first end 214 and the second end 216 of the load bearing element 204. The first load bearing arm 218 and the second load bearing arm 220 diverge from the first end 214 of the load bearing element 204. As shown in FIG. 2E, the first load bearing arm 218 extends in a first direction 236 and the second load bearing arm 220 extends in a second direction 238. The first direction 236 and the second direction 238 are different, and thus an aperture 224 is defined between the first load bearing arm 218 and the second load bearing arm 220. Advantageously, the aperture 224 enables the weight of the load bearing element 204 to be reduced and provides space in which components, e.g. power electronics, can be accommodated.

As can be seen more clearly in FIG. 2B, the first load bearing arm 218 and the second load bearing arm 220 each include ribs or ribbed portions 226. The ribs or ribbed portion 226 of the first load bearing arm 218 and the second load bearing arm 220 increase the strength of the first load bearing arm 218 and the second load bearing arm 220 without adding unnecessary weight to the vehicle crash structure 200 and provide additional structural support to the load bearing element 204.

Referring again to FIG. 2E, the first load bearing arm 218 extends from the first end 214 of the load bearing element 204 at a first non-zero angle 242 relative to the longitudinal axis 206 of the longitudinal energy absorption member 202 and the second load bearing arm 220 extends from the first end 214 of the load bearing element 204 at a second non-zero angle 244 relative to the longitudinal axis 206 of the longitudinal energy absorption member 202. In this embodiment, the first non-zero angle 242 is different to the second non-zero angle 244. It will be appreciated that, in alternative embodiments, the first non-zero angle 242 and the second non-zero angle 244 may be the same.

As shown in FIG. 2D, the support leg 222 is an extruded member and has a first end 228 and a second end 230. The first end 228 of the support leg is attached to the first end 214 of the load bearing element 204 by one or more fastener or any other suitable connection means.

FIG. 2E shows how the support leg 222 extends from the first end 214 of the load bearing element 204 in a third direction 246 and at a third non-zero angle 248 relative to the longitudinal axis 206 of the longitudinal energy absorption member 202. The direction of extension of the support leg 222 from the first end 214 of the load bearing element 204 provides additional support to the longitudinal energy absorption member 202 in a crash event.

The first load bearing arm 218, the second load bearing arm 220 and the support leg 222 each extend from the first end 214 of the load bearing element 204 and define a space 232 (see FIG. 2D). That is, the space 232 extends below the first end 214 of the load bearing element 204 and between the first load bearing arm 218, the second load bearing arm 220 and the support leg 222. The arrangement of the load bearing element 204 provides a tripod-like structure. Advantageously, a traction battery and/or power electronics may, at least partially, extend into the space 232 defined by the load bearing element 204.

The base of the load bearing element 204, i.e. the second end 216 of the load bearing element 204 and the second end 230 of the support leg 222, define a greater cross-sectional area than that of the second end 210 of the longitudinal energy absorption member 202, thereby increasing the stability of the vehicle crash structure 200.

The longitudinal energy absorption member 202 and the load bearing element 204 together define a load path. The load bearing element 204 has a first longitudinal stiffness and the longitudinal energy absorption member 202 has a second longitudinal stiffness. The first longitudinal stiffness is greater than the second longitudinal stiffness.

In a crash event, for example a head-on crash event or a rear-on crash event, load is directed down the length 212 of the longitudinal energy absorption member 202. Since the second longitudinal stiffness of the longitudinal energy absorption member 202 is less than the first longitudinal stiffness of the load bearing element 204, the longitudinal energy absorption member 202 almost fully compresses before any deformation of the load bearing element 204 occurs. Load that reaches the load bearing element 204 diverges in the first direction 236 and the second direction 238 towards a side of the vehicle. Some load may also be transferred in the third direction 246.

In other words, at the first end 214 of the load bearing element 204, the load path splits into diverging portions. The first load bearing arm 218 defines a first diverging portion 250 of the load path, which extends along the first direction 236. The second load bearing arm 220 defines a second diverging portion 252 of the load path, which extends along the second direction 238. The support leg 222 defines a third diverging portion 254 of the load path, which extends along the third direction 246.

In this way, the load is diverted away from, e.g. around, any components, such as a traction battery and/or power electronics which are at least partially accommodated within the space 232. Advantageously, the configuration of the vehicle crash structure 200 enables components that would usually be accommodated within the cabin area to, at least partially, extend beyond the cabin area and thus be increased in size and/or repositioned.

A vehicle body structure 300 according to an embodiment of the invention will now be described with particular reference to FIG. 3, FIG. 4A and FIG. 4B.

The vehicle body structure 300 has an outer end 302 and an inner end 304.

In embodiments of the invention for which a or the vehicle body structure 300 is installed toward the front 402 of the vehicle 400 (i.e. forward of a cabin area 410), the outer end 302 of the vehicle body structure 300 is oriented toward the front 402 of the vehicle 400 and the inner end 304 of the vehicle body structure 300 is oriented toward the cabin area 410 of the vehicle 400.

In embodiments of the invention for which a or the vehicle body structure 300 is installed toward the rear 404 of the vehicle 400 (i.e. rearward of the cabin area 410), the outer end 302 of the vehicle body structure 300 is oriented toward the rear 404 of the vehicle 400 and the inner end 304 of the vehicle body structure 300 is oriented toward the cabin area 410 of the vehicle 400.

The vehicle body structure 300 includes a first side portion 306, which may extend along a first side of the vehicle 400 and a second side portion 308, which may extend along a second, opposing, side of the vehicle 400.

In embodiments of the invention for which a or the vehicle body structure 300 is installed toward the front 402 of the vehicle 400 (i.e. forward of a cabin area 410), the first side portion 306 extends along the first (left) side 406 of the vehicle 400 and the second side portion 308 extends the second (right) side 408 of the vehicle 400.

The vehicle body structure 300 also includes a cross member 310 and a bulkhead panel 312, each of which extends across a width of the vehicle 400 (i.e. between the first side portion 306 and the second side portion 308 of the vehicle body structure 300).

In embodiments of the invention for which a or the vehicle body structure 300 is installed toward the front 402 of the vehicle 400 (i.e. forward of a cabin area 410), the bulkhead panel 312 may be a dash panel of the vehicle 400.

The vehicle body structure 300 further includes a first vehicle crash structure 314 and a second vehicle crash structure 316. Each of the first vehicle crash structure 314 and the second vehicle crash structure 316 is a vehicle crash structure 200 according to an embodiment of the invention, as described above.

In embodiments of the invention for which a or the vehicle body structure 300 is installed toward the front 402 of the vehicle 400 (i.e. forward of a cabin area 410), the first vehicle crash structure 314 extends along the first (left) side 406 of the vehicle 400 and the second vehicle crash structure 316 extends the second (right) side 408 of the vehicle 400.

The second end 216 of the load bearing element 204 is attached to the cross member 310 of the vehicle body structure 300 by welding, one or more fastener or any other suitable connection or attachment means.

Similarly, the second end 230 of the support leg 222 is attached to the cross member 310 of the vehicle body structure 300 by welding, one or more fastener or any other suitable connection or attachment means.

In a crash event, the load is directed down the length 212 of the longitudinal energy absorption member 202 to the load bearing element 204 in each of the first vehicle crash structure 314 and the second vehicle crash structure 316 as described above.

This enables a load to be diverted away from, e.g. around, any components, such as a traction battery and/or power electronics which are at least partially accommodated within the space 232 on each side of the vehicle. Advantageously, the configuration of the vehicle body structure 300 enables components that would usually be accommodated within the cabin area to, at least partially, extend beyond the cabin area and thus be increased in size and/or repositioned.

Advantageously, the load bearing element 204, and the first diverging portion 250, second diverging portion 252 and the third diverging portion 254, enable part of a traction battery and/or power electronics (or indeed other components) to be positioned such that they extend beyond the bulkhead panel from the cabin area of the vehicle, into the spaces 232 defined by the load bearing elements 204 of each of the first vehicle crash structure 314 and the second vehicle crash structure 316. The divergence of the load paths forward of the front bulkhead panel and/or rearward of the rear bulkhead panel, advantageously provides room for a traction battery and/or power electronics to be at least partially housed in the spaces 232 defined by the load bearing elements 204. A larger traction battery and/or additional electronic components can be accommodated. Alternatively, the seats of the vehicle can be lowered in the cabin area as the electronic components can be moved from below the cabin area into the space 232 defined by the load bearing element 204 providing a more comfortable journey for an occupant in the vehicle.

As described above, the vehicle crash structure 200 may be positioned in a front portion of the vehicle. In such embodiments, the load bearing elements 204 are attached to a cross member 310 that is between a front bulkhead panel 312 (e.g. the dash panel) and the longitudinal energy absorption members 202 of each of the first vehicle crash structure 314 and the second vehicle crash structure 316. In the event of a crash event in which the front portion of the vehicle is impacted, the load path is split into a first diverging portion 250, a second diverging portion 252 and a third diverging portion 254 on each side of the vehicle forward of the front bulkhead panel 312.

Additionally or alternatively, the vehicle crash structure 200 may be positioned in a rear portion of the vehicle. In such examples, the load bearing element 204 is attached to a rear cross member 310 between a rear bulkhead panel and the longitudinal energy absorption members 202 of the first vehicle crash structure 314 and the second vehicle crash structure 316. In the event of a crash event in which the rear portion of the vehicle is impacted, the load path is split into a first diverging portion 250, a second diverging portion 252 and a third diverging portion 254 on each side of the vehicle rearward of the rear bulkhead panel 312.

A vehicle according to an embodiment of the invention will now be described with reference to FIG. 4A and FIG. 4B. The vehicle 400 has a front 402, a rear 404, a first (left) side 406 and a second (right) side 408. A cabin area 410 in which a driver of the vehicle and any passengers may be seated is provided in a central portion of the vehicle 400. A longitudinal axis 412 of the vehicle 400 is defined between the front 402 and the rear 404 of the vehicle 400. A transverse axis 414 of the vehicle 400 is defined between the first (left) side 406 and the second (right) side 408 of the vehicle 400.

As shown, the vehicle 400 includes a first vehicle body structure 300 at the front 402 of the vehicle 400 and a second vehicle body structure 300 at the rear 404 of the vehicle 400. Each of the first and second vehicle body structure 300 has a first vehicle crash structure 314 toward the first (left) side 406 of the vehicle 400 and a second vehicle crash structure 316 toward the second (right) side 408 of the vehicle 400.

As shown in FIG. 4A, the first vehicle body structure 300 at the front 402 of the vehicle is an upper load structure 420. The upper load structure 420 provides an upper load path for the transfer of loads experienced during a crash event. The vehicle 400 also incudes a lower load structure 422 which provides a lower load path for the transfer of loads experienced during a crash event.

The lower load structure 420 may include a subframe which passes underneath the traction battery and/or power electronics, the subframe being attached, in use, to a cross member of the vehicle body structure. Optionally the subframe is also attached to the upper load structure 420, for example to the or a part of the first vehicle crash structure 314 and/or to the or a part of the second vehicle crash structure 316 such as the longitudinal energy absorption member 202. In other examples the subframe passes around (i.e. outside the lateral aspects of) the traction battery and/or power electronics. By tuning the stiffness of the upper load structure 420 and the lower load structure 422 and how they attach to the vehicle body structure 300 and to each other, then deformation during crash events may be managed.

As illustrated in FIG. 4B, the vehicle 400 includes a vehicle body structure 300 including a vehicle crash structure 200 in accordance with an embodiment of the invention at each of the front 402 and the rear 404 of the vehicle 400.

In alternative embodiments of the invention a vehicle body structure 300 including a vehicle crash structure 200 in accordance with an embodiment of the invention may be provided only at the front 402 of the vehicle 400. Alternatively, a vehicle body structure 300 including a vehicle crash structure 200 in accordance with an embodiment of the invention may be provided only at the rear 404 of the vehicle 400.

In the embodiment described with reference to FIG. 3, the cross member 310 is separate from the bulkhead panel 312. It will be appreciated that, in alternative embodiments of the invention, the cross member 310 may be part of a bulkhead assembly including the bulkhead panel 312 and the cross member 310.

As shown in FIG. 4A, an upper load structure 420 and a lower load structure 422 are provided at the front 402 of the vehicle 400. It will be appreciated that in examples of the invention, the vehicle body structure 300 at the rear 404 of the vehicle 400 may be an upper load structure and that the vehicle 400 may include a lower load structure at the rear 404 of the vehicle 400. An upper load structure and/or a lower load structure may be provided at the front 402 and/or the rear 404 of the vehicle 400.

It will be appreciated that various changes and modifications can be made to the present invention without departing from the scope of the present application.

## Claims

1. A vehicle crash structure comprising:
a longitudinal energy absorption member; and
a load bearing element;
wherein the load bearing element comprises a first end, a second end, a first load bearing arm and a second load bearing arm, the first load bearing arm and the second load bearing arm each extending between the first end and the second end of the load bearing element;
wherein the first end of the load bearing element is attached to one end of the longitudinal energy absorption member, and wherein the second end of the load bearing element is attached, in use, to a cross member of a vehicle body structure, the cross member between a bulkhead panel of the vehicle body structure and the longitudinal energy absorption member;
wherein the longitudinal energy absorption member and the load bearing element together define a load path for a longitudinal load occurring during a crash event; and
wherein the first load bearing arm defines a first diverging portion of the load path and the second load bearing arm defines a second diverging portion of the load path.

2. The vehicle crash structure of claim 1, wherein, when the load bearing element is attached to the cross member of the vehicle body structure, the first load bearing arm and the second load bearing arm of the load bearing element define a space between the longitudinal energy absorption member and the cross member of the vehicle body structure for accommodating a part of a traction battery and/or power electronics.

3. The vehicle crash structure of claim 1 or 2, wherein the longitudinal energy absorption member has a longitudinal axis, the first diverging portion of the load path extends from the first end of the load bearing element at a first non-zero angle relative to the longitudinal axis of the longitudinal energy absorption member, and the second diverging portion of the load path extends from the first end of the load bearing element at a second non-zero angle relative to the longitudinal axis of the longitudinal energy absorption member.

4. The vehicle crash structure of claim 3, wherein the first diverging portion of the load path extends from the first end of the load bearing element in a first direction and the second diverging portion of the load path extends from the first end of the load bearing element in a second direction, and wherein the first direction is different to the second direction.

5. The vehicle crash structure of claim 3 or 4, wherein the first non-zero angle is between 10 degrees and 60 degrees and/or the second non-zero angle is between 10 degrees and 60 degrees.

6. The vehicle crash structure of any one of claims 1 to 5, wherein the load bearing element has a first longitudinal stiffness and the longitudinal energy absorption member has a second longitudinal stiffness, wherein the first longitudinal stiffness is greater than the second longitudinal stiffness.

7. The vehicle crash structure of any one of claims 1 to 6, wherein the load bearing element comprises a support leg, and wherein a first end of the support leg is attached to the first end of the load bearing element and a second end of the support leg is attached, in use, to the cross member of the vehicle body structure.

8. The vehicle crash structure of claim 7, wherein the support leg defines a third diverging portion of the load path formed by the longitudinal energy absorption member and the load bearing element.

9. A vehicle body structure comprising:
the vehicle crash structure according to any one of claims 1 to 8;
a cross member; and
a bulkhead panel;
wherein the cross member is positioned between the bulkhead panel and the longitudinal energy absorption member of the vehicle crash structure and wherein the second end of the load bearing element is attached to the cross member.

10. The vehicle body structure of claim 9, wherein the cross member and the bulkhead panel form part of a bulkhead assembly.

11. The vehicle body structure of claim 9 or 10, wherein the vehicle crash structure is a first vehicle crash structure, and wherein the vehicle body structure comprises a second vehicle crash structure according to any one of claims 1 to 8.

12. The vehicle body structure of claim 11, wherein the first vehicle crash structure is configured for mounting on a first side of a vehicle and the second vehicle crash structure is configured for mounting on a second side of a vehicle, in use.

13. The vehicle body structure of claim 11 or 12, wherein the first vehicle crash structure and second vehicle crash structure together define an upper load path, and wherein the vehicle body structure comprises a lower load structure defining a lower load path.

14. A vehicle comprising the vehicle body structure according to any one of claims 9 to 13.

15. The vehicle of claim 14, wherein the vehicle body structure is provided at a front portion of the vehicle and/or at a rear portion of the vehicle.
